# EUROPEAN PATENT APPLICATION

(11) **EP 2 887 229 A2**
(43) Date of publication of application: **24.06.2015**
(21) Application number: 14181011.9
(22) Date of filing: 14.08.2014
(51) Int. Cl.: G06F 17/27, G06F 17/28, G10L 15/26

(54) **Communication support apparatus, communication support method and computer program product**

(30) Priority: 20.12.2013 JP 2013264127
(71) Applicant: Kabushiki Kaisha Toshiba, Tokyo 105-8001 (JP); Toshiba Solutions Corporation, Kawasaki-shi, Kanagawa 212-8585 (JP)
(72) Inventor: Cho, Kenta, Kanagawa, 212-8585 (JP); Kano, Toshiyuki, Kanagawa, 212-8585 (JP)
(74) Representative: Hoffmann Eitle

(57) **Abstract**

According to an embodiment, a communication support apparatus converts conversation between users into text data by using a dictionary and causes a terminal device to display the text data. The apparatus includes an event detection unit, a word extraction unit, and a word selection unit. The event detection unit analyzes a sentence obtained by converting a voice of an utterance of a conference participant into text data to detect an event indicating a failure of communication through conversation. The word extraction unit extracts words from the sentence in which the event is detected by the event detection unit. The word selection unit selects, from among the words extracted by the word extraction unit, a word causing a failure of the communication based on a value of a communication failure index calculated from the event detected in the sentence including the words extracted therefrom.

## Description

### CROSS-REFERENCE TO RELATED APPLICATION

This application is based upon and claims the benefit of priority from Japanese Patent Application No. 2013-264127, filed on December 20, 2013; the entire contents of which are incorporated herein by reference.

### FIELD

Embodiments described herein relate generally to a communication support apparatus, a communication support method, and a computer program product.

### BACKGROUND

There is known a technology of converting conversation between users into text data through voice recognition, converting the text data into text data of another language through machine translation as needed, and displaying the resultant text data on a user's terminal device. The above technology is useful in, e.g., a remote conference system as a tool for supporting communication between users participating in a conference. Further, use of the above technology allows contents of the conversation that have been converted into the text data to be stored as conference minutes, which can be referred to later.

In the above technology, when a word that has not been registered in a dictionary used in the voice recognition or used in machine translation is included in the utterance of a user, misrecognition or mistranslation may occur, thus failing to adequately support the communication between users. Therefore, it is necessary to adequately detect the word causing the misrecognition or mistranslation and to register a correct word in the dictionary. It is also necessary to adequately detect a word causing the misrecognition or mistranslation from the text data stored as, for example, the conference minutes for appropriate correction.

There have been developed various methods of extracting the word to be registered in the dictionary or word to be corrected; however, the conventional methods do not use success/failure of communication through conversation as determination materials, so that it is difficult for these methods to extract an adequate word based on a viewpoint of communication support.

### BRIEF DESCRIPTION OF THE DRAWINGS

FIG. 1 is a schematic configuration view of a remote conference system;
FIG. 2 is a block diagram illustrating an example of a functional configuration of a communication support apparatus;
FIG. 3 is an exemplary view illustrating an example of a dictionary used by a conversion unit;
FIG. 4 is a view illustrating an example of a sentence table;
FIG. 5 is a view illustrating an example of a sentence display UI screen;
FIG. 6 is a view illustrating an example of an event type table;
FIG. 7 is a view illustrating an example of an event table;
FIG. 8 is a view illustrating an example of a word table;
FIG. 9 is a view illustrating an example of a word correction UI screen;
FIG. 10 is a flowchart illustrating an example of operation of the communication support apparatus;
FIG. 11 is a view illustrating an example of a sentence display UI screen to be displayed after conference;
FIG. 12 is a view illustrating an example of an event type table used in a modification;
FIG. 13 is a flowchart illustrating an example of operation of a communication support apparatus according to the modification; and
FIG. 14 is a block diagram schematically illustrating an example of a hardware configuration of the communication support apparatus.

### DETAILED DESCRIPTION

According to an embodiment, a communication support apparatus converts conversation between users into text data by using a dictionary and causes a terminal device to display the text data. The apparatus includes an event detection unit, a word extraction unit, and a word selection unit. The event detection unit analyzes a sentence obtained by converting a voice of an utterance of a conference participant into text data to detect an event indicating a failure of communication through conversation. The word extraction unit extracts words from the sentence in which the event is detected by the event detection unit. The word selection unit selects, from among the words extracted by the word extraction unit, a word causing a failure of the communication based on a value of a communication failure index calculated from the event detected in the sentence including the words extracted therefrom.

Hereinafter, an embodiment will be described in detail with reference to the drawings. The embodiment described below is an example of application to a remote conference system, but a system to which the present invention can be applied is not limited thereto.

### Remote Conference System

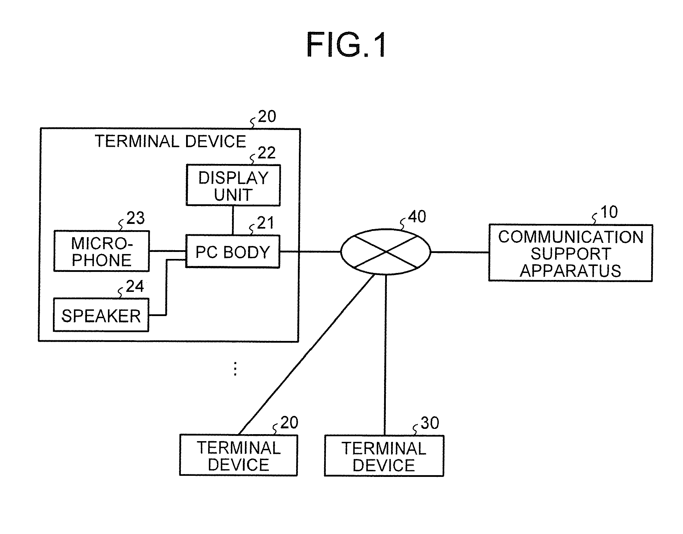

FIG. 1 is a schematic configuration view of a remote conference system provided with a communication support apparatus of the embodiment. As illustrated in FIG. 1, the remote conference system includes a communication support apparatus 10 according to the embodiment, a terminal device 20 used by a conference participant, and a terminal device 30 used by a system administrator, which are connected through a communication network 40.

Typically, the communication support apparatus 10 is implemented as a server provided with a hardware configuration (a processor, a main storage unit, an auxiliary storage unit, and a communication interface) as a general computer system. However, the communication support apparatus 10 is not limited to this, but may be implemented as a virtual machine operating on a cloud system or as an application operating on the terminal devices 20 and 30. In the embodiment, the communication support apparatus 10 is assumed to be implemented as a server having a web server function that performs web-based communication between the terminal devices 20 and 30 through the communication network 40.

The terminal device 20 of the conference participant includes, e.g., a PC (Personal Computer) body 21 provided with a web browser as software, a display unit 22 incorporated in or externally connected to the PC body 21, a microphone 23, and a speaker 24. Alternatively, as the terminal device 20, various information processing terminals, such as a tablet terminal or a mobile phone, that include the display unit 22, microphone 23, and speaker 24 as hardware and include the web browser as software can be used. The terminal device 30 of the system administrator has the same configuration as that of the terminal device 20 of the conference participant.

In the present embodiment, it is assumed that the remote conference system is used in a remote conference held among participants who speak different languages. In the remote conference system, utterances of the participants are acquired using the microphone 23 of the terminal device 20. The communication support apparatus 10 converts the utterances into text data through voice recognition. In addition, the communication support apparatus 10 converts the text data from the voice into text data of a language corresponding to each participant through machine translation. The language to be used in the conference may be native languages of individual participants or a prescribed language. In the latter case, only the utterances of the participant whose native language is different from the prescribed language are subjected to translation.

The text data converted through the voice recognition or machine translation in the communication support apparatus 10 is displayed on the display unit 22 of the terminal device 20 of the participant by the web browser function thereof. In the present embodiment, a unit of the text data corresponding to a single utterance of the participant is called "sentence". During the conference, a sentence display UI screen is displayed on the display unit 22 of the terminal device 20 of the participant. Every time the utterance of the participant is made, the sentence corresponding to the utterance is sequentially displayed on the sentence display UI screen. At the same time, the utterance of the participant is output by voice from the speaker 24 of the terminal device 20 of the participant. Voice sharing may be implemented as one of the functions of the communication support apparatus 10, implemented by using a device other than the communication support apparatus 10, such as a video conference apparatus, or implemented by using an application operating on the terminal device 20.

The communication support apparatus 10 has a function of storing the sentence corresponding to the utterance of the participant in association with, e.g., voice of the utterance. The stored sentence can be displayed on the sentence display UI screen of the display unit 22 of the terminal device 20 after the conference for, e.g., review of the conference.

The communication support apparatus 10 analyzes the sentence corresponding to the utterance of the participant to detect a situation, such as restating or reasking of the utterance, in which communication through conversation may fail. Such a situation is called "event" in the present embodiment. Several utterance patterns that may occur at the failure of communication are previously defined as the events. Each event is given with a communication failure index value representing a degree at which the event in question occurs when communication fails.

Thereafter, the communication support apparatus 10 performs morphological analysis or the like for the sentence in which the event is detected to extract words and selects a word causing the communication failure from the extracted words based on a value of the communication failure index. Then, the communication support apparatus 10 displays a word correction UI screen for correcting the selected word on the display unit 22 of the terminal device 20 of the participant or terminal device 30 of the system administrator. When a correct word is input through the word correction UI screen, the communication support apparatus 10 resisters the input word in the dictionary used for the voice recognition or machine translation or performs correction of the sentence. A timing at which the communication support apparatus 10 extracts the words from the sentence in which the event is detected, selects the word causing the communication failure, and displays the word correction UI screen on the display unit 22 of the terminal devices 20 and 30 may be during the conference or after the conference.

### Communication Support Apparatus

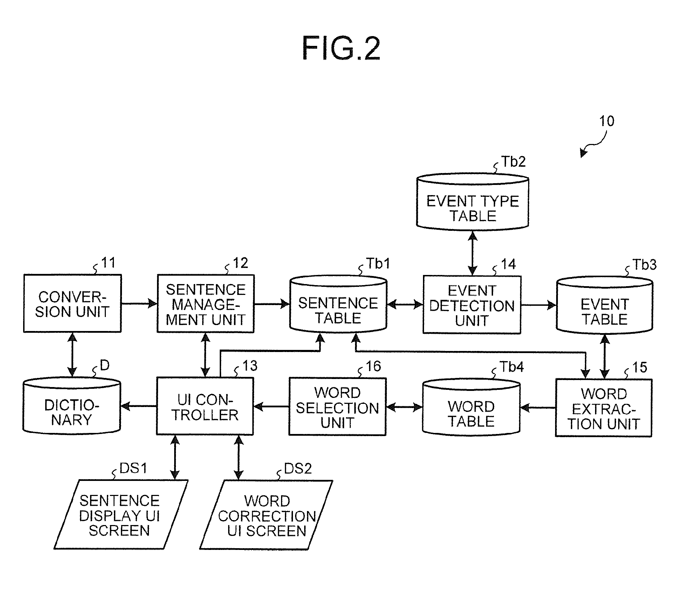

Details of the communication support apparatus 10 according to the present embodiment will be described, taking concrete examples. FIG. 2 is a block diagram illustrating an example of a functional configuration of the communication support apparatus 10. As illustrated in FIG. 2, the communication support apparatus 10 includes a conversion unit 11, a sentence management unit 12, a UI controller 13, an event detection unit 14, a word extraction unit 15, and a word selection unit 16.

The conversion unit 11 performs, using a dictionary D, the voice recognition and, if needed, the machine translation for the utterance of the participant acquired using the microphone 23 of the terminal device 20 to convert the utterance into text data. In the voice recognition, an utterance section automatically detected from voice input through the microphone 23 may be voice-recognized as a single sentence. Alternatively, a section determined by the participant explicitly inputting an utterance start timing and an utterance end timing through the sentence display UI screen may be voice-recognized as the single sentence.

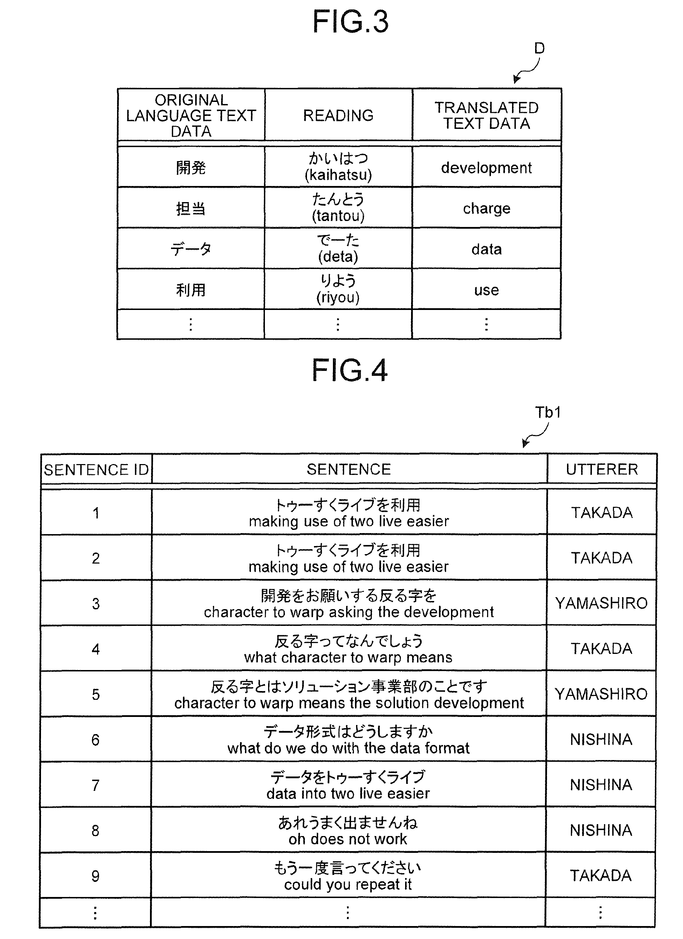

FIG. 3 is an exemplary view illustrating an example of the dictionary D used by the conversion unit 11. In the dictionary D, for each registered word, original language text data, reading, and translated text data corresponding to the original language text data are stored in association with each other. When the word included in the utterance of the participant is found in the dictionary D, the conversion unit 11 can convert the word into correct original language text data or translated text data by using the dictionary D.

The sentence management unit 12 receives the sentence as a result of the processing performed by the conversion unit 11 and records the received sentence in a sentence table Tb1. Further, the sentence management unit 12 passes the sentence received from the conversion unit 11 to the UI controller 13.

FIG. 4 is a view illustrating an example of the sentence table Tb1. In the sentence table Tb1, the sentence obtained by converting the utterance of the participant into text data is stored in association with a sentence ID and information of an utterer. The sentence ID is unique identification information given to each sentence. As the information of the utterer, it is possible to utilize, for example, registration information that a conference sponsor creates before opening of the conference. The sentence table Tb1 is created independently for each conference.

In the present embodiment, there is assumed a case where "Toscribe (reading: tyusukuraibu)" which is a unique service name or " 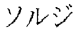 (reading: soruji)" which is an abbreviation for an organization (in this case, abbreviation for "solution division") is included in the utterance of the participant. These words are not registered in the dictionary D, so that voice recognition or machine translation thereof fails. Sentences listed in FIG. 4 identified by sentence IDs 1, 2, and 7, respectively, each represent a case where the utterance of "Toscribe (reading: tyusukuraibu)" is converted through the voice recognition into Japanese text data " 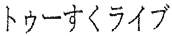 ", and " 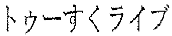 " is converted through the machine translation into English text data "two live easier". Sentences identified by sentence IDs 3, 4, and 5 in FIG. 4, respectively, each represent a case where the utterance of " 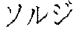 (reading: soruji)" is converted through the voice recognition into Japanese text data " 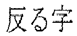 ", and " 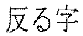 " is converted through the machine translation into English text data "character to warp".

The UI controller 13 causes the display unit 22 of the terminal device 20 of the participant or terminal device 30 of the system administrator to display the sentence display UI screen DS1 or word correction UI screen DS2 and receives an operation input input through the UI screen DS1 or DS2. In the present embodiment, the function of the UI controller 13 is implemented by a Web server. Every time the UI controller 13 receives a new sentence from the sentence management unit 12, it updates the sentence display UI screen DS1 and causes the display unit 22 of the terminal device 20 provided with the web browser display the updated sentence to display UI screen DS1.

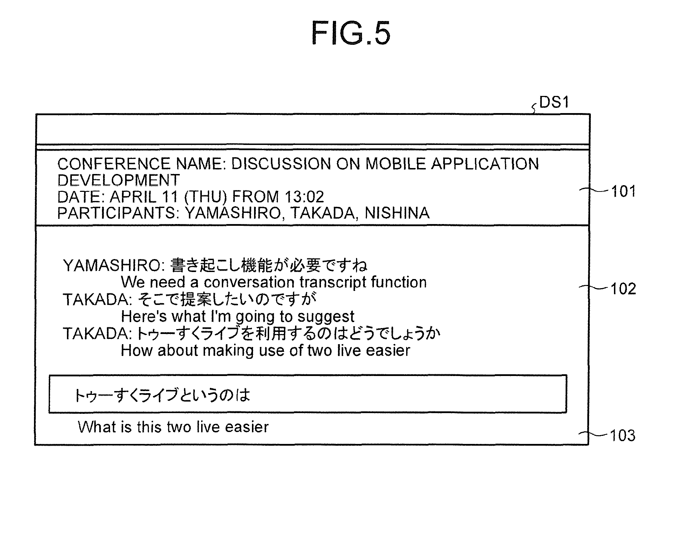

FIG. 5 is a view illustrating an example of the sentence display UI screen DS1 to be displayed on the display unit 22 of the terminal device 20. On the sentence display UI screen DS1, information concerning the conference is displayed in an upper display area 101, and sentences are arranged in chronological order of the utterance in a middle display area 102. As the information concerning the conference, it is possible to utilize, for example, registration information that the conference sponsor creates before opening of the conference. During voice input, text data being voice-recognized and text data obtained as a result of the machine translation are displayed in a lower display area 103. In the example of FIG. 5, the utterance in Japanese is translated into English.

The event detection unit 14 analyzes the sentence recorded in the sentence table Tb1 to detect the event indicating the communication failure through conversation. As described above, the event is an utterance pattern that may occur at the communication failure and is previously stored in an event type table Tb2 in association with the communication failure index value. The event detection unit 14 detects the event based on the event type table Tb2 and records the sentence in which the event is detected in an event table Tb3.

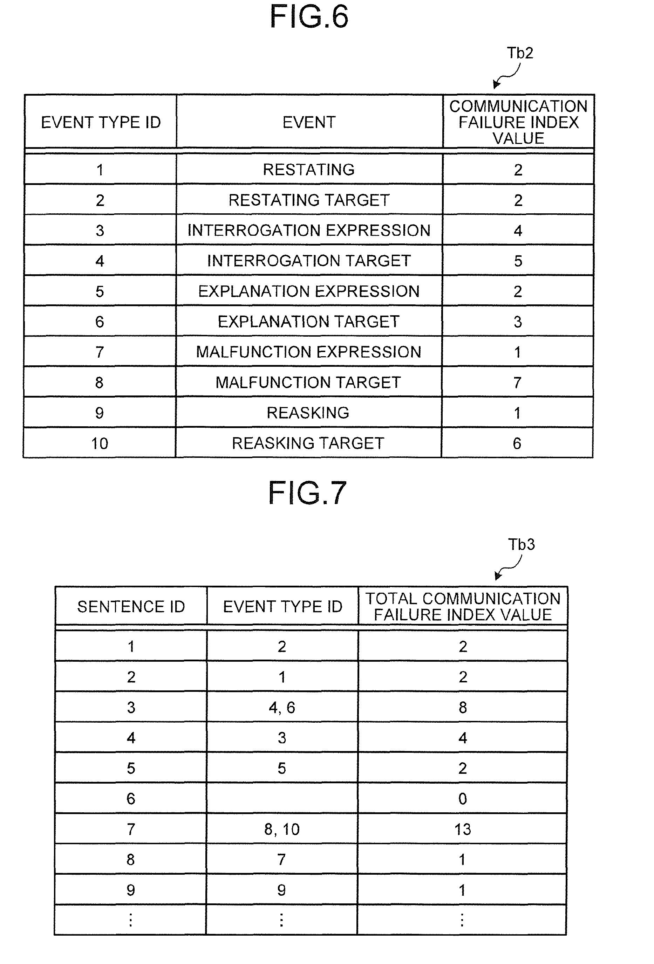

FIG. 6 is a view illustrating an example of the event type table Tb2. In the event type table Tb2, the event which is a prescribed utterance pattern is stored in association with a value of an event type ID and a value of the communication failure index. In the present embodiment, "restating", "restating target", "interrogation expression", "interrogation target", "explanation expression", "explanation target", "malfunction expression", "malfunction target", "reasking", and "reasking target" are each predefined as the event. The event type ID is unique identification information given to each event. The communication failure index value represents a degree at which the event in question occurs when communication fails, as described above, and has a value determined for each event type. The value of the communication failure index may be previously set for each event type as a fixed value. Alternatively, the value of the communication failure index may be a value dynamically changing according to a use state of the system; for example, a value of the communication failure index of the event corresponding to the sentence including the word actually corrected on the word correction UI screen DS2 may be set larger.

Of the events included in the event type table Tb2 of FIG. 6, the "restating" and "restating target" are each a pattern in which a given participant repeatedly makes the same utterance without waiting for an utterance from another participant. When the same sentence as immediately previous one is uttered in succession by the same participant, the event detection unit 14 records the sentence in question in the event table Tb3 as a sentence in which the "restating" event is detected. Further, the event detection unit 14 records a sentence immediately before the sentence in which the "restating" event is detected in the event table Tb3 as a sentence in which the "restating target" event is detected.

The "interrogation expression" and "interrogation target" are each an utterance pattern used in asking the meaning of a specific word. The event detection unit 14 detects a sentence asking the meaning of a specific word, such as "what does XX mean?", according to a specific rule and records the detected sentence in the event table Tb3 as a sentence in which the "interrogation expression" event is detected. Further, the event detection unit 14 records the immediately previous sentence uttered by another participant that has caused the "interrogation expression" event in the event table Tb3 as a sentence in which the "interrogation target" event is detected.

The "explanation expression" and "explanation target" are each an utterance pattern used in explaining the meaning of a specific word. The event detection unit 14 detects a sentence explaining the meaning of a specific word according to a specific rule and records the detected sentence in the event table Tb3 as a sentence in which the "explanation expression" event is detected. Further, the event detection unit 14 records, in the event table Tb3, a sentence (first sentence) preceding the sentence (second sentence) in which the "explanation expression" event is detected and including a word which is a target of the "explanation expression" event, the second sentence having being uttered by the same participant as one who utters the first sentence, as a sentence in which the "explanation target" event is detected.

The "malfunction expression" and "malfunction target" are each an utterance pattern used in expressing that the communication support apparatus 10 does not operate properly. The event detection unit 14 detects a sentence expressing that the communication support apparatus 10 does not operate properly, such as "does not work well", according to a specific rule and records the detected sentence in the event table Tb3 as a sentence in which the "malfunction expression" event is detected. Further, the event detection unit 14 records a sentence immediately before the sentence in which the "malfunction expression" event is detected in the event table Tb3 as a sentence in which the "malfunction target" event is detected.

The "reasking" and "reasking target" are each an utterance pattern used when a given participant asks another participant to repeat the same utterance. The event detection unit 14 detects a sentence asking another participant to repeat the same utterance, such as "could you repeat it?" according to a specific rule and records the detected sentence in the event table Tb3 as a sentence in which the "reasking" event is detected. Further, the event detection unit 14 records the immediately previous sentence uttered by another participant that has caused the "reasking " event in the event table Tb3 as a sentence in which the "reasking target" event is detected.

For example, as the rule for detecting the sentence, a method that performs matching between morpheme strings or specific word strings for a result obtained by the morphological analysis can be used. In the word matching, a distance representing a difference between words is defined, and words falling within a certain distance may be determined to be the same. Further, the rule for detecting the sentence may be represented by a probabilistic language model. Further, a plurality of rules may be set for each event type.

FIG. 7 is a view illustrating an example of the event table Tb3. In the event table Tb3, a sentence ID of the sentence in which the event is detected, event type IDs of all events detected in the sentence in question, and a total communication failure index value are stored in association with each other. The total communication failure index value is a total value (first total value) obtained by adding values of the communication failure indices of all the events detected in the sentence in question and serves as an index indicating likelihood of the communication failure.

The word extraction unit 15 extracts words from the sentence in which the event is detected by using the event table Tb3 and sentence table Tb1 and creates a word table Tb4.

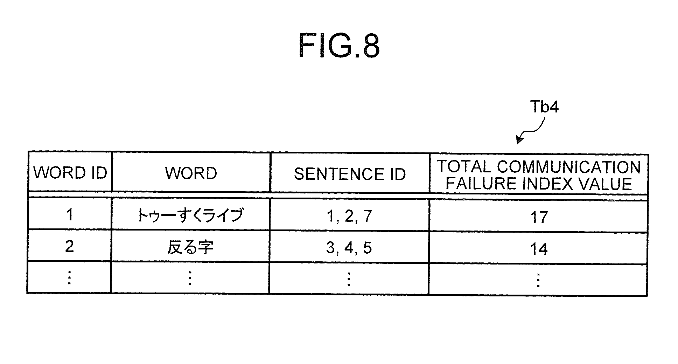

FIG. 8 is a view illustrating an example of the word table Tb4. In the word table Tb4, the words extracted from the sentence in which the event is detected are each stored in association with a word ID, the sentence ID, and the total communication failure index value. The word ID is unique identification information given to each extracted word. The sentence ID is a sentence ID of the sentence from which the word in question is extracted. When the same word is extracted from a plurality of sentences, sentence IDs of all the sentences are listed. The total communication failure index value is total communication failure index value given to the sentence from which the word is extracted. When the same word is extracted from a plurality of sentences, a total value (second total value) obtained by adding total communication failure index values given respectively to all the sentences becomes the total communication failure index value corresponding to the word in question.

When creating the word table Tb4, the word extraction unit 15 performs the morphological analysis for the sentence in which the event is detected to extract the words. Then, the word extraction unit 15 records the words extracted from the sentence in the word table Tb4. When there is no word corresponding to the extracted word in the word table Tb4, the word extraction unit 15 adds this extracted word in the word table Tb4, records the corresponding sentence ID of the sentence from which the word in question is extracted in association with the word, and enters the total communication failure index value of the sentence in the word table Tb4 as a total communication failure index value of the word. On the other hand, when the extracted word has already been listed in the word table Tb4, the word extraction unit 15 adds a sentence ID of the sentence from which the word is extracted to a field of the sentence ID corresponding to the word in question and adds the total communication failure index value of the sentence in question to the total communication failure index value of the word. The word extraction unit 15 performs the above processing for all the extracted words to thereby create the word table Tb4. Although only a few words are listed for illustrative simplification in the example of FIG. 8, all the words extracted from all the sentences in which the event is detected are listed in the word table Tb4. In place of recording all the words in the word table Tb4, only unknown words extracted using an existing unknown word extraction method may be added.

The word selection unit 16 selects a word causing the communication failure from among the words recorded in the word table Tb4 based on the total communication failure index value of each of the words recorded in the word table Tb4. For example, the word selection unit 16 selects, from among the words recorded in the word table Tb4, a word the total communication failure index value of which is equal to or more than a predetermined threshold as the word causing the communication failure. Further, the word selection unit 16 may sort the words recorded in the word table Tb4 in descending order of the total communication failure index value and select a top predetermined number of words as the word causing the communication failure. The threshold value and predetermined number may be previously set to adequate values, respectively.

The word selected by the word selection unit 16 is passed to the UI controller 13. Upon receiving the word from the word selection unit 16, the UI controller 13 creates the word correction UI screen DS2 for correcting the received word properly and causes the display units 22 of the respective terminal devices 20 and 30 each provided with the web browser to display the created word correction UI screen DS2.

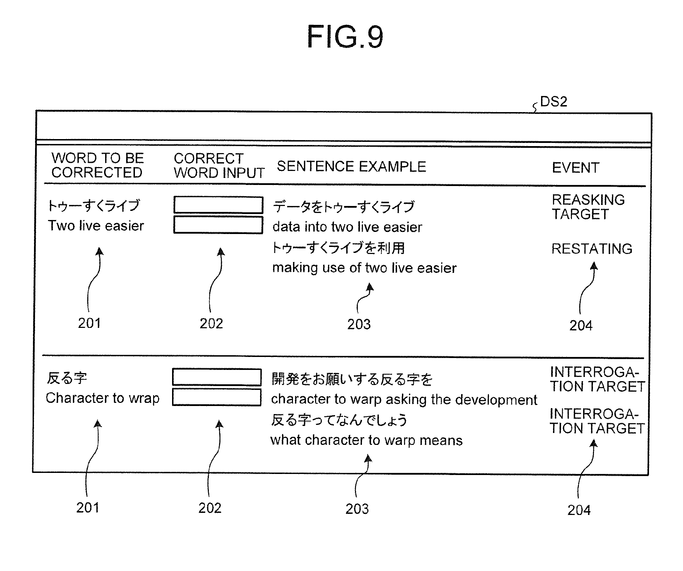

FIG. 9 is a view illustrating an example of the word correction UI screen DS2 to be displayed on the display units 22 of the respective terminal devices 20 and 30. In the word correction UI screen DS2, the words selected by the word selection unit 16 are displayed in descending order of the total communication failure index value each as a word 201 to be corrected. To the right of the word 201 to be corrected, there is provided a correct word text box 202 for inputting a correct word with respect to the word 201 to be corrected. Further, there are displayed a sentence example 203 including the word 201 to be corrected and an event 204 detected from the sentence. The participant who uses the terminal device 20 or system administrator who uses the terminal device 30 inputs, in the text box 202 of the word correction UI screen DS2 displayed on the display unit 22, a correct word with respect to the word 201 to be corrected, thereby achieving correction of the word 201 to be corrected.

In the present embodiment, it is assumed that the system administrator uses the word correction UI screen DS2 to update the dictionary D. In this case, after the conference, the UI controller 13 causes the display unit 22 of the terminal device 30 that the system administrator uses to display the word correction UI screen DS2 in response to a request from the system administrator. Then, when a word is input in the text box 202 of the word correction UI screen DS2, the UI controller 13 receives this input and adds the input word to the dictionary D. The processing of adding the word to the dictionary D may be executed by a different function from the UI controller 13.

Further, the UI controller 13 may cause the display unit 22 of the terminal device 20 that the participant uses to display the word correction UI screen DS2 during the conference and add the word input in the text box 202 of the word correction UI screen DS2 to the dictionary D. In this case, the event detection unit 14, word extraction unit 15, and word selection unit 16 execute their processing as needed during the conference. When the total communication failure index value of a given word is equal to or more than the threshold, the UI controller 13 causes the display unit 22 of the terminal device 20 that the participant uses to display the word correction UI screen DS2 as, e.g., a pop-up screen on the sentence display UI screen DS1. Then, when a word is input in the text box 202 of the word correction UI screen DS2, the UI controller 13 receives the input and adds the input word to the dictionary D.

In addition to or in place of the adding of the word input in the text box 202 of the word correction UI screen DS2 to the dictionary D, the UI controller 13 may replace the word before correction in the sentence recorded in the sentence table Tb1 with a correct word so as to perform correction of the sentence. The processing of correcting the sentence including the word before correction may be executed by a different function from the UI controller 13.

When voice of the utterance corresponding to the sentence recorded in the sentence table Tb1 is stored, the following processing may be executed. That is, the word input in the text box 202 of the word correction UI screen DS2 is added to the dictionary D, then the voice recognition or machine translation is performed once again for the voice of the utterance corresponding to the sentence recorded in the sentence table Tb1, and a result of the voice recognition or machine translation is displayed on the sentence display UI screen DS1 or added to the sentence table Tb1.

Further, when the word is added to the dictionary D, a high weight may be given to the added word so as to allow the added word to be used preferentially in the voice recognition. Further, when the word is added to the dictionary D, the sentence including the word in question may be used for learning of a machine leaning-based unknown word extraction method.

### Operation

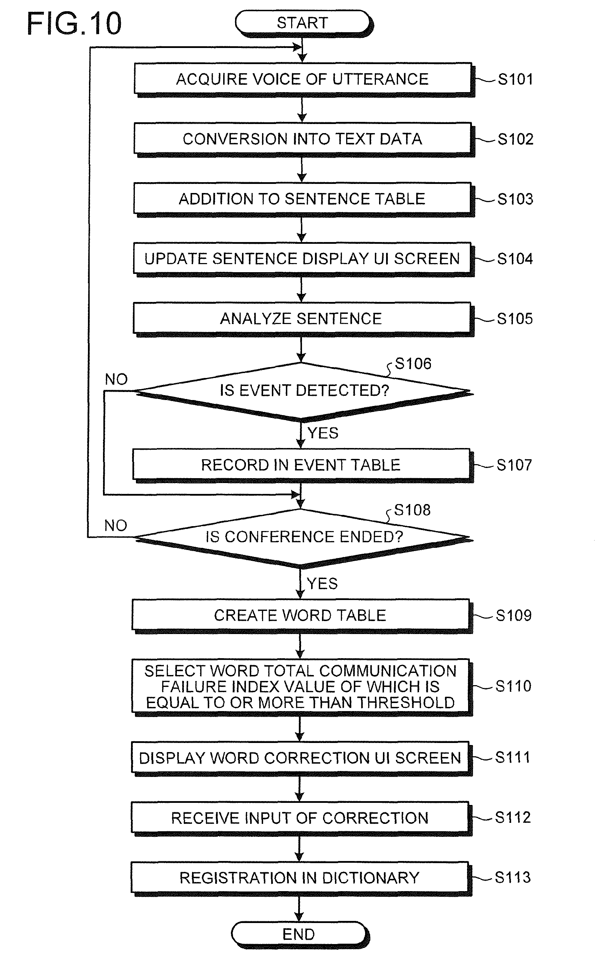

The following describes operation of the communication support apparatus 10 according to the present embodiment with reference to FIG. 10. FIG. 10 is a flowchart illustrating an example of operation of the communication support apparatus 10 according to the present embodiment. More specifically, the example of FIG. 10 illustrates operation of the communication support apparatus 10, in which, during the conference, the display unit 22 of the terminal device 20 of the participant displays the sentence display UI screen DS1 and, after the conference, the display unit 22 of the terminal device 30 of the system administrator displays the word correction UI screen DS2 for update of the dictionary D.

During the conference, when voice of the utterance is acquired through the microphone 23 of the terminal device 20 of the participant (step S101), the conversion unit 11 of the communication support apparatus 10 converts the utterance into text data through the voice recognition or machine translation (step S102) and passes a result of the conversion to the sentence management unit 12 as a sentence per utterance.

The sentence management unit 12 adds the sentence received from the conversion unit 11 to the sentence table Tb1 (step S103) and then passes the sentence to the UI controller 13.

Upon receiving the sentence from the sentence management unit 12, the UI controller 13 updates the sentence display UI screen DS1 (step S104) and then causes the display unit 22 of the terminal device 20 of the participant to display the updated sentence display UI screen DS1.

Then, the event detection unit 14 analyzes the sentence recorded in the sentence table Tb1 (step S105) to determine whether or not the event is detected (step S106). When the event is detected (Yes in step S106), the event detection unit 14 records information of the detected event in the event table Tb3 (step S107). When no event is detected (No in step S106), the processing of step S107 is skipped.

Thereafter, the communication support apparatus 10 determines whether or not the conference is ended (step S108). When the conference has not yet been ended (No in step S108), the processing flow returns to step S101, and the processing of step S101 and subsequent steps are repeated. Whether or not the conference is ended is determined by determining, for example, whether or not the participant explicitly inputs information indicating the end of the conference through the sentence display UI screen DS1.

When the conference is ended (Yes in step S108), the word extraction unit 15 extracts the words from the sentence, in which the event is detected, recorded in the event table Tb3 and creates the word table Tb4 (step S109). Then, the word selection unit 16 selects, from among the words recorded in the word table Tb4, a word the total communication failure index value of which is equal to or more than a predetermined threshold as the word causing the communication failure (step S110) and passes the selected word to the UI controller 13.

Upon receiving the word from the word selection unit 16, the UI controller 13 creates the word correction UI screen DS2 and causes the display unit 22 of the terminal device 30 of the system administrator to display the created word correction UI screen DS2 (step S111). Then, the UI controller 13 receives a correction that the system administrator inputs using the word correction UI screen DS2

(step S112) and registers the corrected word in the dictionary D (step S113).

### Modification

In the example described above, the word table Tb4 is created after the conference based on the event table Tb3 created during the conference. However, the event detection and recording of the information in the event table Tb3 may be performed not only during the conference, but also after the conference. That is, the word table Tb4 may be created based on the event table Tb3 obtained after the conference.

The following describes a modification in which, for review of the conference, the display unit 22 of the terminal device 20 displays the sentence display UI screen, and an input operation through the sentence display UI screen is detected as one event, followed by recording of information thereof in the event table Tb3. In the present modification, it is assumed that voice of the utterance of the participant during the conference is stored in association with the sentence obtained by converting the utterance into text data. Further, in the present modification, only the voice recognition conversion of the utterance into text data is performed, while the machine translation and display of the sentence during the conference are not performed.

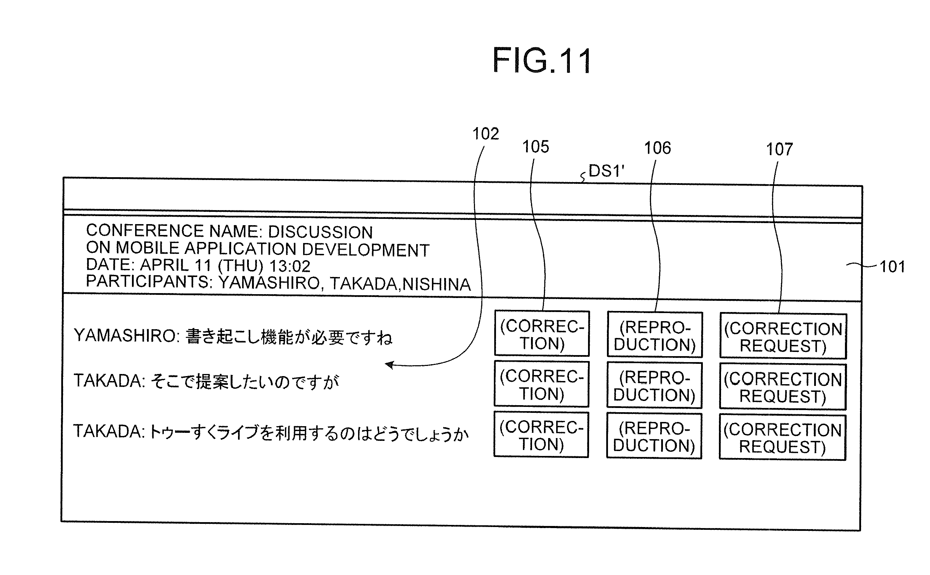

In the present modification, after the conference, the UI controller 13 causes the display unit 22 of the terminal device 20 to display a sentence display UI screen DS1' for review of the conference in response to a request from the participant or the like. FIG. 11 is a view illustrating an example of the sentence display UI screen DS1' to be displayed on the display unit 22 of the terminal device 20 after the conference. On the sentence display UI screen DS1', information concerning the conference is displayed in an upper display area 101, and sentences recorded in the sentence table Tb1 are arranged in chronological order of the utterance in a middle display area 102. Further, the sentence display UI screen DS1' is provided with a "correction" button 105 for correcting a sentence being displayed, a "reproduction" button 106 for reproducing voice corresponding to the displayed sentence, and a "correction request" button 107 for asking a maintenance service (system administrator, etc.) for correction with respect to the displayed sentence.

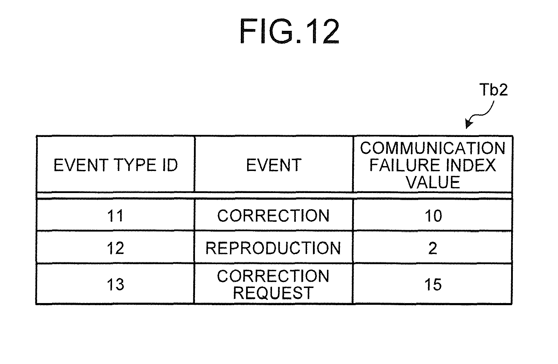

In the present modification, the event detection unit 14 detects operations with respect to the "correction" button 105, "reproduction" button 106, and "correction request" button 107, respectively, provided on the sentence display UI screen DS1' each as the event and adds the detected event to the event table Tb3. At this time, as illustrated in FIG. 12, "correction", "reproduction", and "correction request" are each registered as the event in the event type table Tb2 referred to by the event detection unit 14 and each associated with the event type ID and the communication failure index value.

Thereafter, after browsing of the sentence on the sentence display UI screen DS1', the word extraction unit 15 creates the word table Tb4, and word selection unit 16 selects the word causing the communication failure, in the same manner as in the above-described example.

### Operation in Modification

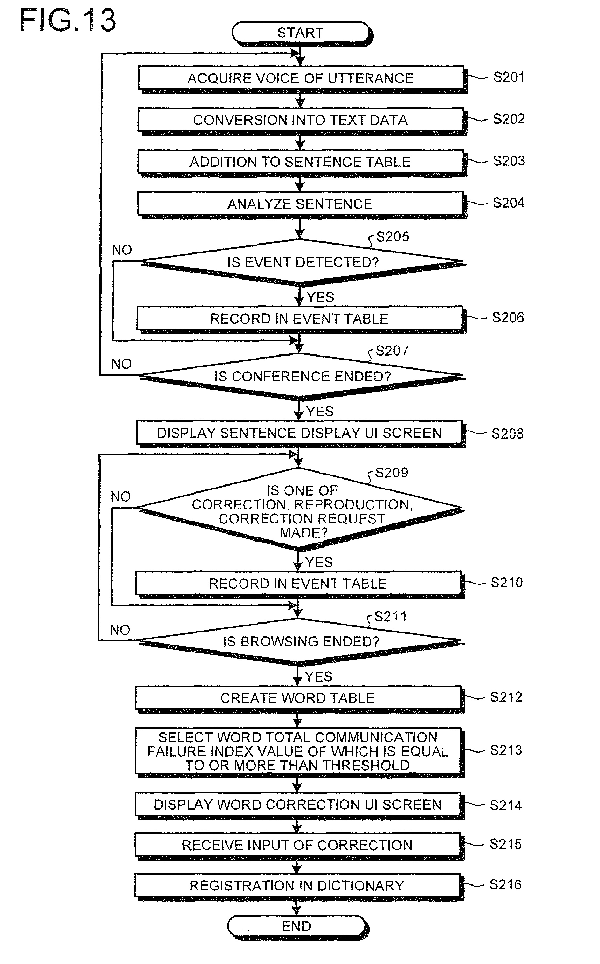

The following describes operation of the communication support apparatus 10 according to the modification with reference to FIG. 13. FIG. 13 is a flowchart illustrating an example of operation of the communication support apparatus 10 according to the modification.

During the conference, when voice of the utterance is acquired through the microphone 23 of the terminal device 20 of the participant (step S201), the conversion unit 11 of the communication support apparatus 10 converts the utterance into text data through the voice recognition (step S202) and passes a result of the conversion to the sentence management unit 12 as a sentence per utterance.

The sentence management unit 12 adds the sentence received from the conversion unit 11 to the sentence table Tb1 (step S203).

Then, the event detection unit 14 analyzes the sentence recorded in the sentence table Tb1 (step S204) to determine whether or not the event is detected (step S205). When the event is detected (Yes in step S205), the event detection unit 14 records information of the detected event in the event table Tb3 (step S206). When no event is detected (No in step S205), the processing of step S206 is skipped.

Thereafter, the communication support apparatus 10 determines whether or not the conference is ended (step S207). When the conference has not yet been ended (No in step S207), the processing flow returns to step S201, and the processing of step S201 and subsequent steps are repeated. Whether or not the conference is ended is determined by determining, for example, whether or not the acquisition of voice through the microphone 23 is stopped for a given time or more.

After the conference (Yes in step S207), when a sentence browsing request specifying a conference name is issued from, e.g., a participant who intends to review the conference, the UI controller 13 creates the sentence display UI screen DS1' based on the sentence table Tb1 corresponding to the specified conference name and causes the display unit 22 of the terminal device 20 of the patient who has issued the sentence browsing request to display the sentence display UI screen DS1' (step S208).

While the sentence display UI screen DS1' is being displayed on the display unit 22 of the terminal device 20, the UI controller 13 determines whether or not one of the "correction" button 105, "reproduction" button 106, and "correction request" button 107 provided on the sentence display UI screen DS1' is operated (step S209). Then, when one of the "correction" button 105, "reproduction" button 106, and "correction request" button 107 is operated (Yes in step S209), the event detection unit 14 detects the operation as the event and adds information of the detected event to the event table Tb3 (step S210). When none of the buttons are operated (No in step S209), the processing of step S210 is skipped.

Thereafter, the communication support apparatus 10 determines whether or not the browsing of the sentence for the conference review is ended (step S211). When the browsing of the sentence has not yet been ended (No in step S211), the processing flow returns to step S209, and the processing of step S209 and subsequent steps are repeated. Whether or not the browsing of the sentence is ended is determined by determining, for example, whether or not the participant who reviews the conference explicitly inputs information indicating the end of the browsing through the sentence display UI screen DS1'.

When the browsing of the sentence is ended (Yes in step S211), the word extraction unit 15 extracts the words from the sentence, in which the event is detected, recorded in the event table Tb3 and creates the word table Tb4 (step S212). Then, the word selection unit 16 selects, from among the words recorded in the word table Tb4, a word whose total communication failure index value is equal to or more than a predetermined threshold as the word causing the communication failure (step S213) and passes the selected word to the UI controller 13.

Upon receiving the word from the word selection unit 16, the UI controller 13 creates the word correction UI screen DS2 and causes the display unit 22 of the terminal device 30 of the system administrator to display the created word correction UI screen DS2 (step S214). Then, the UI controller 13 receives a correction that the system administrator inputs using the word correction UI screen DS2 (step S215) and registers the corrected word in the dictionary D (step S216).

### Advantageous Effects of Embodiment

As has been described in detail with specific examples, the communication support apparatus 10 according to the present embodiment analyzes the sentence obtained by converting the utterance of the participant into text data to detect the event indicating the communication failure through conversation. Then, the communication support apparatus 10 extracts words from the sentence in which the event is detected and selects, from the extracted words, a word causing the communication failure based on the communication failure index having a value set for each event type. Thus, according to the communication support apparatus 10 of the present embodiment, it is possible to adequately select, from the text data obtained by conversion from conversation between users, the word causing the communication failure through conversation.

Further, the communication support apparatus 10 according to the present embodiment receives a correction with respect to the selected word and registers the corrected word in the dictionary D used in the voice recognition or machine translation, thereby achieving update of the dictionary D at low cost. The update of the dictionary D can reduce misrecognition or mistranslation, thereby allowing the communication to be supported adequately.

Further, the communication support apparatus 10 according to the present embodiment receives a correction with respect to the selected word and further corrects the sentence using the corrected word. This can clarify information to be transmitted between users, thereby allowing the communication to be supported adequately.

### Supplementation

The functional constituent elements of the above-described communication support apparatus 10 according to the present embodiment can be implemented by a program (software) executed using, for example, a general-purpose computer system as a basic hardware.

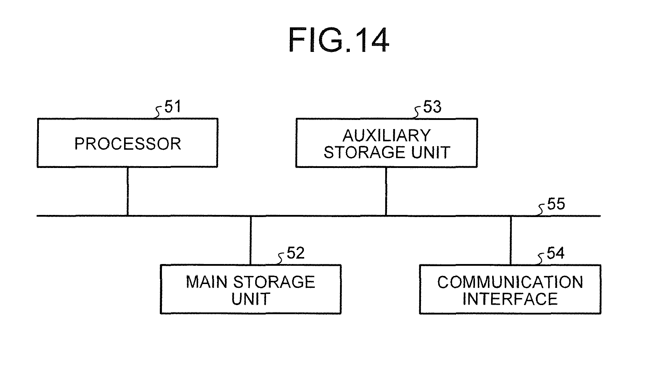

FIG. 14 is a block diagram schematically illustrating an example of a hardware configuration of the communication support apparatus 10. As illustrated in FIG. 14, the communication support apparatus 10 is constructed as a general-purpose computer system including a processor 51 such as a CPU, a main storage unit 52 such as a RAM, an auxiliary storage unit 53 implemented using various storage devices, a communication interface 54, and a bus 55 connecting the above components. The auxiliary storage unit 53 may be connected to the above components through a wired or wireless LAN (Local Area Network).

The functional constituent elements of the communication support apparatus 10 can be implemented by the processor 51 executing a program stored in the auxiliary storage unit 53 or the like by using the main storage unit 52. The program is recorded in a computer-readable recording medium such as a CD-ROM (Compact Disk Read Only Memory), a flexible disc (FD), a CD-R (Compact Disk Recordable), or a DVD (Digital Versatile Disc) as a file in an installable format or an executable format and is provided as a computer program product.

Further, it is also possible to store the program on another computer connected to a network such as Internet so as to provide the program by downloading the same through the network. Further, the program may be provided or distributed through a network such as Internet. Further, the program may be provided in a state of being incorporated in advance in a ROM (auxiliary storage unit 53) provided in the computer.

The program has a module configuration including the functional constituent elements (conversion unit 11, sentence management unit 12, UI controller 13, event detection unit 14, word extraction unit 15, and word selection unit 16) of the communication support apparatus 10. The processor 51 reads and executes, as actual hardware, the program from the recording medium, so that the above constituent elements are loaded into the main storage unit 52 and generated on the main storage unit 52. Some or all of the functional constituent elements of the communication support apparatus 10 can be implemented using dedicated hardware, such as an ASIC (Application Specific Integrated Circuit) or an FPGA (Field-Programmable Gate Array).

While certain embodiments have been described, the embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirits of the inventions.

## Claims

1. A communication support apparatus that converts conversation between users into text data by using a dictionary and causes a terminal device to display the text data, the apparatus comprising:
a detection unit configured to analyze a sentence which is a unit of the text data corresponding to a single utterance of the user to detect an event indicating a failure of communication through conversation;
an extraction unit configured to extract words from the sentence in which the event is detected; and
a selection unit configured to select, from among the words extracted by the extraction unit, a word causing the communication failure based on a value of a communication failure index calculated from the event detected in the sentence including the words extracted therefrom.

2. The apparatus according to claim 1, wherein
a first total value is given to the sentence in which the event is detected, the first total value being a value obtained by adding the values of the communication failure indices of all the events detected in the sentence,
a second total value is given to each of the words extracted by the extraction unit, the second total value being obtained by adding the first total values given respectively to all the sentences in which the extracted word appears, and
the selection unit selects, from among the words extracted by the extraction unit, a word given with the second total value equal to or more than a predetermined threshold, as the word causing the communication failure.

3. The apparatus according to claim 1, further comprising a UI controller configured to cause the terminal device to display a UI screen that presents the word selected by the selection unit and receives an input of a correct word.

4. The apparatus according to claim 3, wherein
the word input through the UI screen is added to the dictionary.

5. The apparatus according to claim 3, wherein
the sentence including the word selected by the selection unit is corrected with use of the word input through the UI screen.

6. The apparatus according to claim 1, wherein
the detection unit detects, as one of the events, a restating in which the same utterance is repeatedly made.

7. The apparatus according to claim 1, wherein
the detection unit detects, as one of the events, a reasking to request repetition of the same utterance.

8. The apparatus according to claim 1, wherein
the detection unit detects, as one of the events, an interrogation expression used in asking the meaning of the utterance.

9. The apparatus according to claim 1, wherein
the detection unit detects, as one of the events, an explanation expression used in explaining the meaning of the utterance.

10. A communication support method executed in a communication support apparatus that converts conversation between users into text data by using a dictionary and causes a terminal device to display the text data, the method comprising:
detecting an event indicating a failure of communication through conversation by analyzing a sentence which is a unit of the text data corresponding to a single utterance of the user;
extracting words from the sentence in which the event is detected; and
selecting, from among the extracted words, a word causing the communication failure based on a value of a communication failure index calculated from the event detected in the sentence including the words extracted therefrom.

11. A computer program product comprising a computer readable medium including computer-executable instructions for supporting communication, the instructions causing the computer to perform:
detecting an event indicating a failure of communication through conversation by analyzing a sentence which is a unit of the text data corresponding to a single utterance of the user;
extracting words from the sentence in which the event is detected; and
selecting, from among the extracted words, a word causing the communication failure based on a value of a communication failure index calculated from the event detected in the sentence including the words extracted therefrom.
